# EUROPÄISCHE PATENTANMELDUNG

(11) **EP 2 196 822 A2**
(43) Veröffentlichungstag der Anmeldung: **16.06.2010**
(21) Anmeldenummer: 09176730.1
(22) Anmeldetag: 23.11.2009
(51) Int. Cl.: G01S 13/60, G01S 7/35

(54) **Verfahren zum Betreiben eines Doppler-Radarsensors und Doppler-Radarsensor**

(30) Priorität: 11.12.2008 DE 102008062438
(71) Anmelder: SIEMENS AKTIENGESELLSCHAFT, 80333 München (DE)
(72) Erfinder: Burgaß, Stefan, 10315, Berlin (DE); Kakuschke, Chris Dr., 12435, Berlin (DE); Richter, Olaf, 13591, Berlin (DE); Seisenberger, Claus, 84181, Neufrannhofen (DE)

(57) **Zusammenfassung**

Die Erfindung betrifft ein Verfahren zum Betreiben eines zur Geschwindigkeits- und/oder Wegermittlung, insbesondere bei einem Schienenfahrzeug, vorgesehenen Doppler-Radarsensors, der einen Oszillator zur Erzeugung eines CW (Continuous Wave)-Signals aufweist sowie einen diesbezüglichen Doppler-Radarsensor. Zur Erweiterung des Messbereichs in Richtung Stillstand ist vorgesehen, dass das CW-Signal, insbesondere in einem stillstandsnahen Geschwindigkeitsbereich und bei Stillstand, in der Frequenz verändert, insbesondere mittels Frequenzsweeping moduliert, wird.

## Beschreibung

Die Erfindung betrifft ein Verfahren zum Betreiben eines zur Geschwindigkeits- und/oder Wegermittlung, insbesondere bei einem Schienenfahrzeug, vorgesehenen Doppler-Radarsensors, der einen Oszillator zur Erzeugung eines CW (Continuous Wave)-Signals aufweist sowie einen zur Durchführung des Verfahrens geeigneten Doppler-Radarsensor.

Die nachfolgende Beschreibung bezieht sich im Wesentlichen auf die Anwendung von Doppler-Radarsensoren bei der Geschwindigkeits- und/oder Wegermittlung von Schienenfahrzeugen, ohne dass die Erfindung auf diese spezielle Anwendung beschränkt ist. Vielmehr kann die Erfindung für jegliche Relativbewegungen, beispielsweise bei industriellen Fertigungsprozessen oder Fahrzeugen aller Art, eingesetzt werden.

Moderne Zugbeeinflussungssysteme benötigen eine genaue Ermittlung des Weges und der Geschwindigkeit der Schienenfahrzeuge. Traditionelle Geschwindigkeitsmessverfahren basieren auf Wegimpulsgebern. Diese erzeugen mit jeder Umdrehung des Rades eine definierte Anzahl von Impulsen. Die Auswertung der zeitlichen Abstände dieser Impulse führt zu einem Geschwindigkeitswert. Schlupf beim Anfahren oder Abbremsen, Blockieren während des Bremsvorganges und eine durch Abnutzung verursachte Veränderung des Radumfanges sowie unerkannte Defekte, beispielsweise infolge Zungenbruch, können die gemessene Geschwindigkeit jedoch unzulänglich verfälschen. Diese Fehlerquellen wirken sich insbesondere im stillstandsnahen Geschwindigkeitsbereich untolerierbar aus. Zur Verifizierung des Messwertes und zur Erhöhung der Sicherheit werden deshalb üblicherweise die Umdrehungen von zwei möglichst nicht angetriebenen und gebremsten Rädern erfasst. Zunehmend wird einer der beiden Wegimpulsgeber durch einen Doppler-Radarsensor ersetzt.

Durch diffuse Reflexion des von dem Oszillator des Doppler-Radarsensors abgestrahlten CW (Continuous Wave)-Signals am Untergrund gelangt ein geringer Anteil wieder an eine Antenne des Doppler-Radarsensors. Im Doppler-Radarsensor entsteht durch Frequenzmischung von Sendesignal und reflektiertem Empfangssignal bei einer Bewegung des Doppler-Radarsensors relativ zum Untergrund ein niederfrequentes Dopplersignal, das der Geschwindigkeit des Schienenfahrzeugs direkt proportional ist.

Ein gänzlicher Verzicht auf Wegimpulsgeber ist bisher jedoch nicht möglich, da die Auswertung des Dopplereffektes bei sehr kleinen Geschwindigkeiten an ihre Grenzen stößt. Die minimal messbare Geschwindigkeit liegt dabei oberhalb einer tolerierbaren Schwelle. Im Stillstand fehlt das Dopplersignal und damit die Führungsgröße zur Geschwindigkeits- und/oder Wegmessung über Grund. Dennoch kann es bei Vorbeifahrten auf einem Nachbargleis oder durch Bewegung innerhalb des Erfassungsbereiches der Signalkeule zur Ausgabe von Geschwindigkeit und Weg kommen sowie zur Einschätzung dieser Messwerte als gültig. Diesem Effekt wird durch Einbau der Doppler-Radarsensoren möglichst mittig am Fahrzeug entgegengewirkt, so dass der Hauptteil der Signalkeule das Gleisbett zwischen den Schienen ausleuchtet. Dadurch kann die Störbeeinflussung zwar verringert, aber nicht ausgeschlossen werden, so dass dennoch fehlerhafte Messwerte bei Stillstand als gültig eingeschätzt werden können. Diese fehlerhafte Gültigkeitseinschätzung im Stillstand führt bei Odometrieanwendungen mit nur einem weiteren Wegsensor, insbesondere bei Kombination mit einem Wegimpulsgeber, wegen Unentscheidbarkeit zu einem Verfügbarkeitsproblem des Gesamtsystems. Eine Priorisierung des Wegimpulsgebers bei Stillstandsausgabe ist wegen dessen systematischer Anfälligkeit hinsichtlich falscher Stillstandsmeldung bei gleitenden Rädern oder unerkanntem Defekt nicht möglich. Damit unterhalb einer unteren Grenzgeschwindigkeit der Doppler-Radarsensor ignoriert werden kann, müssen Maßnahmen getroffen werden, um fehlerhafte Messungen des Wegimpulsgebers auszuschließen. Deshalb wird oftmals ein weiterer Wegimpulsgeber oder andere Sensorik im Fahrzeug zusätzlich eingebaut. Bei fehlenden Messwerten durch den Doppler-Radarsensor im stillstandsnahen Geschwindigkeitsbereich sinkt außerdem die erzielbare Genauigkeit.

Der Erfindung liegt die Aufgabe zugrunde, ein Verfahren zum Betreiben eines gattungsgemäßen Doppler-Radarsensors sowie einen entsprechenden Doppler-Radarsensor bereitzustellen, welche eine Erweiterung des Messbereiches im stillstandsnahen Geschwindigkeitsbereich und bei Stillstand ermöglichen. Dabei ist anzustreben, die Verwendung eines zusätzlichen Wegimpulsgebers entbehrlich zu machen.

Verfahrensgemäß wird die Aufgabe dadurch gelöst, dass das CW-Signal, insbesondere in einem stillstandsnahe Geschwindigkeitsbereich und bei Stillstand, in der Frequenz verändert wird. Der Oszillator des Doppler-Radarsensors ist dazu mit Mitteln zur Frequenzmodulation des CW-Signals ausgestattet.

Bei bekannten Doppler-Radarsensoren führt das komplexwertige Dopplersignal bei hohen Geschwindigkeiten zu sehr genau messbaren Frequenzverschiebungen als Maß für die Geschwindigkeit. Dieser Frequenzanteil fehlt bei Stillstand. Allerdings wird auch bei Stillstand im Mischer ein Amplitudensignal erzeugt, welches jedoch aufgrund von Offsetspannungen im Mischer und Reflexionen an Übergängen und an der Antenne zunächst hochpassgefiltert werden muss, bevor es verstärkt wird, so dass im Stillstand kein auswertbares Messsignal erzeugt wird.

Um dennoch ein Messsignal zu erzeugen, wird im Stillstand eine Frequenzänderung mittels einstellbarer statischer Frequenzwerte oder vorzugsweise mittels Frequenzsweeping durchgeführt. Frequenzsweeping, auch Wobbeln genannt, bewirkt eine Modulation des Signals derart, dass seine Frequenz zwischen einem Startwert und einem Endwert periodisch, vorzugsweise linear, geändert wird. Durch den Frequenzsweep im Stillstand ist es bei Doppler-Radarsensoren möglich, Nutz- und Störsignal anhand von Amplitude und Frequenz zu unterscheiden. Das zusätzliche Frequenzsweeping ermöglicht eine entfernungsselektive Geschwindigkeitsmessung.

Durch Anordnung des Doppler-Radarsensors an einem Fahrzeug derart, dass der Radarstrahl den Untergrund in einen bekannten Entfernungsbereich beleuchtet, ist es möglich, nur Signale, die in diesen definierten Entfernungsbereich reflektiert werden, für die Geschwindigkeitsmessung zu betrachten. Auf diese Weise kann eine Störbeeinflussung von Fahrzeugen auf dem Nachbargleis wegen deren größerer Entfernung von echten Geschwindigkeitsmesswerten unterschieden werden. Aber auch Bewegungen in einem Entfernungsbereich, der geringer als der Abstand zwischen Doppler-Radarsensor und Untergrund ist, können erfasst und von echten Geschwindigkeitsmesswerten unterschieden werden. Derartige Bewegungen innerhalb der Signalkeule, d. h. des Strahlenganges, können z. B. durch bewegte Gräser, Nagetiere oder andere Ursachen hervorgerufen werden. Letztlich kann zuverlässig der Stillstand detektiert werden.

Die Messbereichslücke bei Stillstand und im stillstandsnahen Geschwindigkeitsbereich wird geschlossen, so dass zusätzliche Sensoren für geringe Geschwindigkeiten entbehrlich werden. Vorteilhaft ist dabei besonders der Wegfall der Zungenbruchüberwachung bei Wegimpulsgebern.

Der frequenzsweepfähige Oszillator ist vorzugsweise als FMCW (Frequency Modulated Continuous Wave)-Oszillator ausgebildet. Zusätzlich kann eine PLL (Phase-Locked-Loop)-Stabilisierung vorgesehen sein. Durch den Frequenzsweep wird innerhalb einer bestimmten Zeit, beispielsweise 10 ms, eine Bandbreite, beispielsweise 100 MHz, überstrichen, derart, dass sich aufgrund der Anzahl von Wellenlängen, die zwischen Sensor und Untergrund passen, ein komplexwertiges Dopplersignal messbarer Größe, beispielsweise 100 MHz, ergibt. Dieser Frequenzmesswert wird durch das Hochpassfilter übertragen und kann problemlos mittels FFT (Fast Fourier Transformation) ausgewertet werden. Dabei wird aus einem digitalisierten Radarsignal ein entfernungsabhängiger Geschwindigkeitswert berechnet.

Die Erfindung wird nachfolgend anhand einer figürlichen Darstellung erläutert.

Die Figur zeigt eine schematische Darstellung des Doppler-Messprinzips. Ein frequensweepfähiger Doppler-Radarsensor besteht im Wesentlichen aus einem FMCW (Frequency Modulated Continuous Wafe)-Oszillator 1, einer Antenne 2 zum Senden und Empfangen des hochfrequenten Dopplersignals sowie einem Inphase-Mischer 3 zur Demodulation des Empfangssignals in originaler Phasenlage und einem Quadratur-Mischer 4 zur Demodulation einer mittels 90°-Phasenschieber 5 um 90° phasenverschobenen Referenzfrequenz.

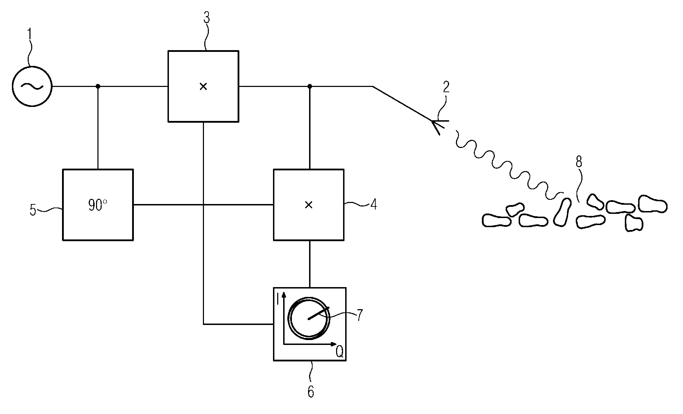

Der Inphase-Mischer 3 liefert als I-Anteil des komplexen Messsignals die originale Amplitude. Der vom Quadratur-Mischer 4 gelieferte Q-Anteil ist ebenfalls eine Amplitude, deren Größe jedoch die Phasenlage repräsentiert. Der I-Anteil und der Q-Anteil ergeben in einem I/Q-Diagramm 6 einen absoluten Amplitudenwert, der in Form eines Zeigers 7 darstellbar ist.

Der FMCW-Oszillator 1 moduliert das CW-Signal im Stillstand und im stillstandsnahen Bereich mit einem Frequenzsweep, wodurch es möglich wird, Nutz- und Störsignale anhand von Amplitude und Frequenz zu unterscheiden.

Durch die Frequenzmodulation ergibt sich ein Entfernungsbezug der Messung. Das reflektierte Signal hat gegenüber dem gesendeten Signal eine Laufzeitverschiebung und damit eine abweichende Frequenz. Dadurch ist auch bei Stillstand ein Signal messbar, welches durch Entfernungszuordnung eine Unterscheidbarkeit zwischen Stillstand und Störbeeinflussung durch Schienenfahrzeuge auf Nachbargleisen oder bewegte Objekte innerhalb des Strahlenganges ermöglicht.

## Patentansprüche

1. Verfahren zum Betreiben eines zur Geschwindigkeits- und/oder Wegermittlung, insbesondere bei einem Schienenfahrzeug, vorgesehenen Doppler-Radarsensors, der einen Oszillator zur Erzeugung eines CW (Continuous Wave)-Signals aufweist,
**dadurch gekennzeichnet, dass**
das CW-Signal, insbesondere in einem stillstandsnahen Geschwindigkeitsbereich und bei Stillstand, in der Frequenz verändert wird.

2. Doppler-Radarsensor zur Durchführung des Verfahrens nach Anspruch 1,
**dadurch gekennzeichnet, dass**
der Oszillator Mittel zur Frequenzmodulation des CW-(Continuous Wave)-Signals aufweist.

3. Doppler-Radarsensor nach Anspruch 2,
**dadurch gekennzeichnet, dass**
die Mittel zum Erzeugen eines linearen Frequenzsweeps ausgebildet sind.

4. Doppler-Radarsensor nach Anspruch 2 oder 3,
**dadurch gekennzeichnet, dass**
der Oszillator als FMCW (Frequency Modulated Continuous Wave)-Oszillator (1) ausgebildet ist.

5. Doppler-Radarsensor nach einem der Ansprüche 2 bis 4,
**dadurch gekennzeichnet, dass**
Mittel zum Digitalisieren des Radarsignals und Mittel zur Berechnung eines entfernungsabhängigen Geschwindigkeitswertes vorgesehen sind.

6. Doppler-Radarsensor nach einem der Ansprüche 2 bis 5,
**dadurch gekennzeichnet, dass**
der Doppler-Radarsensor derart an einem Fahrzeug angeordnet ist, dass der Radarstrahl den Untergrund in einem bekannten Entfernungsbereich beleuchtet.
